# EUROPÄISCHE PATENTANMELDUNG

(11) **EP 2 354 522 A2**
(43) Veröffentlichungstag der Anmeldung: **10.08.2011**
(21) Anmeldenummer: 11150801.6
(22) Anmeldetag: 13.01.2011
(51) Int. Cl.: F02M 25/07

(54) **Vorrichtung zur Regelung eines Fluidstroms**

(30) Priorität: 27.01.2010 DE 102010006038
(71) Anmelder: Pierburg GmbH, 41460 Neuss (DE)
(72) Erfinder: Paffrath, Holger, Dr., 50259, Pulheim (DE)
(74) Vertreter: Patentanwälte ter Smitten

(57) **Zusammenfassung**

Die vorliegende Erfindung betrifft eine Vorrichtung (10) zur Regelung eines Fluidstroms bestehend aus einem Gehäuse (12) mit einem Einlasskanal (14) und mindestens zwei Fluidkanälen (17, 18, 19), die über Öffnungen (27, 28, 29) mit dem Einlasskanal (14) verbunden sind. An der Verbindung zwischen dem Einlasskanal (14) und den Fluidkanälen (17, 18, 19) ist ein Stellelement (20) angeordnet, das die Öffnungen (27, 28, 29) der Fluidkanäle (17, 18, 19) beherrscht. Das Stellelement (20) der Vorrichtung (10) weist eine zumindest teilzylindrische Mantelfläche (24) auf, wobei das Stellelement (20) drehbar gelagert und kontinuierlich verstellbar ist.

## Beschreibung

Die vorliegende Erfindung betrifft eine Vorrichtung zur Regelung eines Fluidstroms bestehend aus einem Gehäuse mit einem Einlasskanal und mindestens zwei Fluidkanäle, die über Öffnungen mit dem Einlasskanal verbunden sind. An der Verzweigung zwischen dem Einlasskanal und den Fluidkanälen ist ein Stellelement angeordnet, das die Öffnungen der Fluidkanäle beherrscht.

Abgasrückführungssysteme für Verbrennungskraftmaschinen wurden eingeführt, um die bei der Verbrennung entstehenden Stickoxide (NOₓ) zu reduzieren. Dabei wird das Abgas im Allgemeinen über Abgaskühler oder über eine Byppss-Leitung zum Verbrennungsmotor zurückgeführt. Mit Hilfe des Abgaskühlers wird die Temperatur des zurückgeführten Abgases reduziert, die Senkung der Temperatur ist jedoch nicht in jedem Betriebspunkt erwünscht. In diesem Fall wird das Abgas über die Bypass-Leitung geführt. Ob das Abgas durch den Abgaskühler oder die Bypass-Leitung gerührt wird, wird mittels einer Bypassklappe eingestellt. Die Bypassklappe ist üblicherweise jedoch nur in der Lage zwischen zwei Einstellungen zu schalten. Dabei wird das Abgas entweder vollständig durch den Abgaskühler oder über die Bypass-Leitung geführt. Eine Zwischenstellung, um eine Mischtemperatur des Abgases einzustellen, ist meistens nicht möglich. Bei Systemen, die eine Regelung des Abgasmassenstroms erlauben, steigt jedoch die Gefahr einer Kühlerversottung, weil immer der gesamte Querschnitt des Kühlers, über den eventuell nur ein Teilmassenstrom des Abgas geleitet wird, genutzt wird. Die Folge davon ist, dass die Strömungsgeschwindigkeit und eventuell die Austrittstemperatur des Abgases reduziert werden und es zur Anlagering der Rußpartikel kömmt.

Aus der WO 03 091651 A1 ist eine Vorrichtung bekannt, bei der die Temperatur eines Fluides regelbar ist. Diese Vorrichtung weist einen Einlasskanal und einen Auslasskanal auf. Beide Kanäle sind mit mehreren hintereinander in Reihe geschalteten wärmetauschenden Elementen, durch die das Fluid geleitet wird, verbunden. Die Regelung der Temperatur des Fluids erfolgt über einen in dem Einlasskanal und dem Auslasskanal angeordneten Kolben, durch dessen Verschiebung je nach gewünschter Fluidtemperatur die einzelnen warmetauschenden Elemente für das Fluid geöffnet oder verschlossen werden. Eine Querschnittsänderung der zu durchströmenden Fläche ist mit dieser Ausführung nicht möglich.

Aufgabe der Erfindung demgegenüber ist es, eine Vorrichtung zur Regelung eines Fluidstroms zu schaffen, die auf einfache Weise eine Versottung eines nachgeschalteten Kühlers auch bei geringen Volumen strömen verhindert.

Diese Aufgabe wird erfindungsgemaß durch eine Vorrichtung zur Regelung eines Fluidstroms mit dem kennzeichnenden Teil des Patentanspruchs 1 gelöst.

Das Stellelement der Vorrichtung weist eine zumindest teilzylindrische Mantelfläche auf, wobei das Stellelement drehbar gelagert und kontinuierlich verstellbar ist. Mit dem an der Verbindung zwischen dem Einlasskanal und den Fluidkanälen angeordneten Stellelement ist eine vollständig Regelung des Kuhlerquerschnitts, der als zu durchströmende Fläche für das Abgas zur Verfügung steht, möglich, Durch die differenzierte Öffnung der einzelnen Fluidkanäle kann die Strömungsgeschwindigkeit des Abgases im Abgaskühler hoch gehalten werden, so dass die Verrottung minimiert wird.

Vorzugsweise weist das Gehäuse einen zu den Fluidkanälen zusätzlichen Bypass-Kanal auf. Somit wird mit einer einzigen Vorrichtung eine vollständige Leitung des Fluids über die Bypass-Leitung oder eine Teilleitung des Fluids, indem das Abgas zu gewissen Massenstromanteilen Über die Bypass-Leitung und die einzelnen vom Stellelement freigeschalteten Fluidkanäle geführt wird, erzielt. Diese Regelung führt gleichzeitig zu einer Minimierung der Versottung des Abgaskühlers

Gemäß einer bevorzugten Ausgestaltung weist das Gehäuse mindestens einen Flansch auf. Ein Flansch ermöglicht eine Verbindung zwischen zwei Elementen, die mit einander verbunden werden sollen. Zudem kann die Verbindung der Elemente wieder gelöst werden, wenn eines der Elemente ausgetauscht werden muss.

Vorzugsweise ist an den einen Flansch eine Erweiterung montierbar, wobei die Erweiterung ein Abgaskühler und/oder eine Bypass-Leitung ist. Ein derartiger Aufbau aus einzelnen Komponenten ist kostengünstig und bietet eine hohe Flexibilität, so dass solche Systeme je nach Bedarf zusammengestellt werden können.

Gemäß einer bevorzugten Ausgestaltung ist die zumindest teilzylindrische Mantelfläche über zwei Verbindungselemente an einer Welle des Stellelements montiert. Somit können je nach Bedarf unterschiedliche Ausführungen der tellzylindrischen Mantelflächen mit der Welle montiert werden. Solch ein Aufbau ist somit kostengünstig und bietet eine hohe Flexibilität.

Vorzugsweise sind die Fluidkanäle als Durchströmungskanäle eines Wärmetauschers ausgebildet. Jeder der Fluidkanäle weist damit eine definierte Querschnittsfläche auf, wobei über die wärmetauschende Funktion der einzelnen Fluidkanäle eine definierte Abkühlung des Abgases erzielt werden kann.

Gemäß einer bevorzugten Ausgestaltung sind die Fluidkanäle durch Stege getrennt, wobei die dem Stellelement zugewandten Flächen Ventilsitzflächen bilden, die mit dem Stellelement korrespondieren. Somit werden keine zusätzlichen Dichtflächen benötigt.

Vorzugsweise schließen die die zumindest teilzylindrische Mantelfläche im Umfang begrenzenden Kanten einen Winkel zwischen 45° und 180° ein. Somit können alle denkbaren Positionen des Stellelements an der Verbindung zwischen Einlasskanal, Bypass-Leitung und den Fluidkanäle zuverlässig und differenziert geregelt werde.

Nachfolgend wird ein Ausführungsbeispiel der Erfindung anhand der Zeichnung näher erläutert.
Figur 1 zeigt eine Schnittansicht der erfindungsgemäßen Vorrichtung.

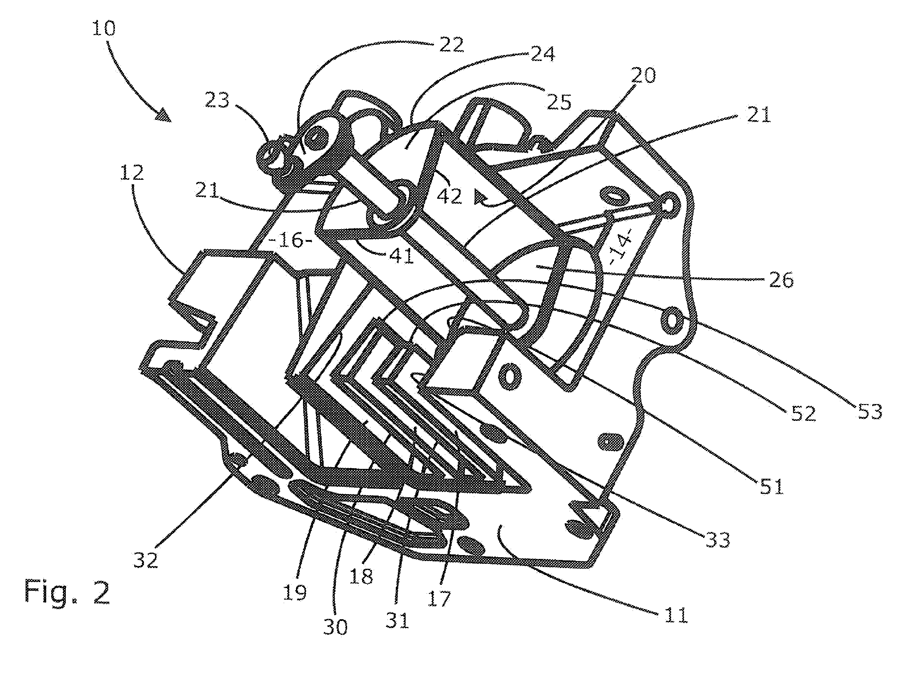

Figur 2 eine perspektivische Ansicht der erfindungsgemäßen Vorrichtung.

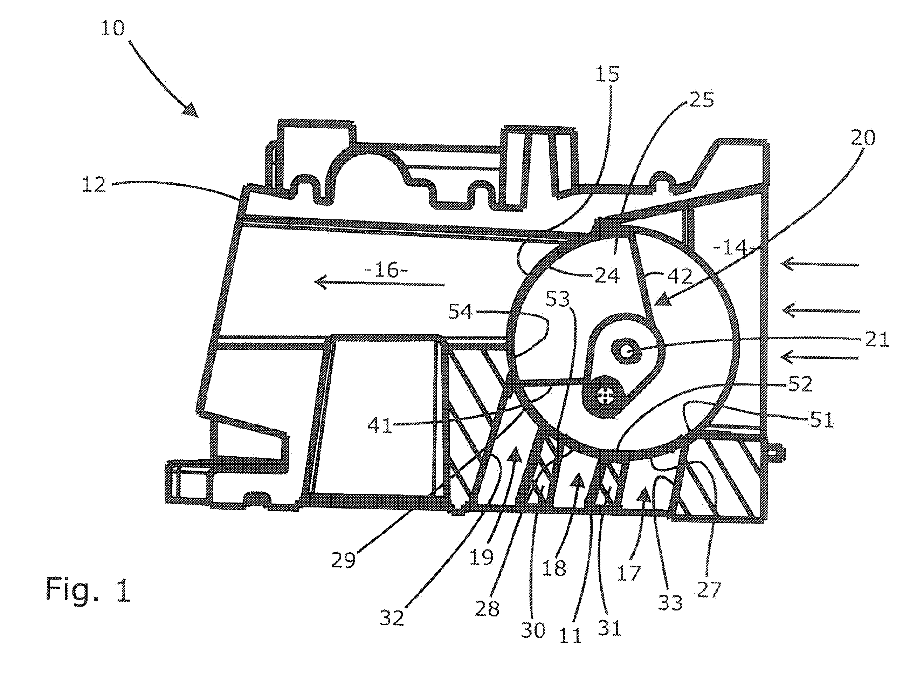

Fig. 1 zeigt eine Vorrichtung 10 zur Regelung eines Fluidstroms, die ein Gehäuse 12 aufweist, welches einen Einlasskanal 14, eine Bypass-Leitung 16 und drei Fluidkanäle 17, 18, 19 aufweist, die über Öffnungen 27, 28, 29, 15 mit dem Einlasskanal 14 verbunden werden können. Die Öffnungen 15, 27, 28, 29 werden von einem Stellelement 20 beherrscht, welches an einer verzweigung zwischen Einlasskanal 14, Bypass-Leitung 16 und den drei Fluidkanälen 17, 18, 19 angeordnet ist. Das Gehäuse 12 weist ferner mindestens einen Flansch 11 auf, an den eine passende Erweiterung, in Form eines Wärmetauschers montierbar ist.

Die Fluidkanäle 17, 18, 19 sind durch Stege 30, 31, die zwischen den Fluidkanälen 17, 18, 19 angeordnet sind, voneinander getrennt, wobei die Stege 30, 31 und zwei Außenstege 32, 33 an der zu dem Stellelement 20 zugewandten Flasche Ventilsitzflächen 51, 52, 53, 54 aufweisen.

Das Stellelement 20 besteht aus einer Welle 21, die an ihrem einen axialen Ende einen Hebel 22 mit einem Zapfen 23 aufweist. An der Welle 21 ist eine zumindest teilzylindrische Mantelfläche 24 über zwei im Wesentlichen dreieckige Verbiridungsflächen 25, 26 montiert. Das Stellelement 20 kann beispielsweise über einen elektromotorischen Antrieb (nicht gezeigt) angetrieben werden, wobei der elektromotorische Antrieb (nicht gezeigt) mit dem Zapfen 23 verbunden wird. Des Weiteren sind ebenfalls weitere, dem Fachmann bekannte Antriebe denkbar.

Das Stellelement 20 ist drehbar gelagert und ist kontinuierlich verstellbar. Das Stellelement 20 ist zudem in einem bestimmten Winkel, der üblicherweise kleiner 180° ist, drehbar. Die von der Welle 21 abgewandte Mantelfläche 24 des Teilzylinders korrespondiert mit den Ventilsitzflächen 51, 52, 53, 54.

Im Kühlungsmodus der erfindungsgemäßen Vorrichtung 10 ist das Stellelement 20 derart positioniert, dass die von der Welle 21 abgewandte Mantelfläche 24 des Teilzylinders die Bypass-Leitung 16 vollständig absperrt. In dieser Stellung des Stellelements 20 sind alle Fluidkanäle 17, 18, 19 geöffnet, so dass das entsprechende Fluid, welches über den Einlasskanal 14 in die Vorrichtung 10 hineinströmt, über den gesamten vom Kühler zur Verfügung stehenden Querschnitt geleitet und sodann gekühlt wird.

In einer Zwischenstellung des Stellelements 20 wird das entsprechende Fluid zu gewissen Massenströmanteilen über die Bypass-Leitung 16 und einen einzelnen Fluidkanal 17 geleitet. Hierbei ist das Stellelement 20 so positioniert, dass die von der Welle 21 abgewandte Mantelfläche 24 des Teilzylinders einen Teilquerschnitt der Bypass-Leitung 16 und zwei Fluidkanäle 8, 19 absperrt. Somit wird bei einem geringeren Massenstrom des Fluids im Kühler ein reduzierter Querschnitt des Kühlers dem Fluid zur Verfügung gestrellt. Dadurch wird die Strömungsgeschwindigkeit des Fluids im Abgaskühler hoch gehalten werden, so dass die Versottung minimiert wird.

In einem vollständigen Bypass-Modus korrespondiert die von der Welle 21 abgewandte Mantelfläche 24 des Teilzylinders mit den Ventilsitzflächen 51, 52, 53, 54, so dass alle Fluidkanäle von dem Stellelement 20 verschlossen sind. In dieser Stellung des Stellelements 20 ist die Bypass-Leitung 16 komplett geöffnet, so dass das aus dem Einlasskanal 14 kommende Fluid vollständig durch die Bypass-Leftung 16 geleitet wird.

Selbstverständlich können weitere Zwischenstellungen im Vergleich zu den Beschriebenen angefahren werden, so dass eine Temperaturregelung möglich wird, bei der eine ausreichend hohe Strömungsgeschwindigkeit im Kühler in äffen Zuständen sichergestellt wird.

## Patentansprüche

1. Vorrichtung (10) zur Regelung eines Fluidstroms, umfassend:
ein Gehäuse (12) mit einem Einlasskanal (14) und mindestens zwei Fluidkanälen (17, 18, 19), die über Öffnungen (27, 28, 29) mit dem Einlasskanal (14) verbunden sind,
ein an der Verzweigung zwischen Einlasskanal (14) und den Fluidkanälen (17, 18, 19) angeordnetes Stellelement (20), das die Öffnungen (27, 28, 29) der Fluidkanäle (17, 18, 19) beherrscht,
**dadurch gekennzeichnet, dass**
das Stellelement (20) eine zumindest teilzylindrische Mantelfläche (24) aufweist, wobei das Stellelement (20) drehbar gelagert und kontinuierlich verstellbar ist.

2. Vorrichtung (10) zur Steuerung eines Fluidstroms nach Anspruch 1, **dadurch gekennzeichnet, dass** das Gehäuse (12) einen zu den Fluidkanälen (17, 18, 19) zusätzlichen Bypass-Kanal (16) aufweist.

3. Vorrichtung (10) zur Steuerung eines Fluidstroms nach Anspruch 1 oder 2, **dadurch gekennzeichnet, dass** das Gehäuse (12) mindestens einen Flansch (11) aufweist.

4. Vorrichtung (10) zur Steuerung eines Fluidstroms nach Anspruch 3, **dadurch gekennzeichnet, dass** an den einen Flansch (11) mindestens eine Erweiterung montierbar ist und die Erweiterung ein Abgaskühler und/oder eine Bypass-Leitung ist.

5. Vorrichtung (10) zur Steuerung eines Fluidstroms nach einem der vorangegangenen Ansprüche, **dadurch gekennzeichnet, dass** die zumindest teilzylindrische Mantelfläche (24) über zwei Verbindungselemente (25, 26) an einer Weile (21) des Stellelements (20) montiert ist.

6. Vorrichtung (10) zur Steuerung eines Fluidstroms nach einem der vorangegangen Ansprüche, **dadurch gekennzeichnet, dass** die Fluidkanäle (17, 18, 19) als Durchströmungskanäfe eines Wärmetauschers ausgebildet sind.

7. Vorrichtung (10) zur Steuerung eines Fluidstroms nach einem der vorangegangenen Ansprüche, dadurch gekenntzeichnet, dass die Fluidkanäle (17, 18, 19) durch Stege (30, 31, 32, 33) getrennt sind, und die dem Stellelement (20) zugewandten Flächen Ventilsitzflächen (51, 52, 53, 54) bilden, die mit dem Stellelement (20) korrespondieren.

8. Vorrichtung (10) zur Steuerung eines Fluidstroms nach einem der vorangegangenen Ansprüche, **dadurch gekennzeichnet, dass** die die zumindest teilzylindrische Mantelfläche (24) im Umfang begrenzenden Kanten (41, 42) einen Winkel zwischen 45° und 180° einschließen.
